# EUROPEAN PATENT APPLICATION

(11) **EP 4 527 890 A1**
(43) Date of publication of application: **26.03.2025**
(21) Application number: 23806884.5
(22) Date of filing: 15.05.2023
(51) Int. Cl.: C08L 67/02, C08J 5/18, H01M 10/052, H01M 4/13, H01M 4/64

(54) **POLYESTER BASE FILM, PREPARATION METHOD THEREFOR AND APPLICATION THEREOF, POLE PIECE, AND LITHIUM BATTERY CELL**

(30) Priority: 17.05.2022 CN 202210535054; 02.06.2022 WO PCT/CN2022/096761
(71) Applicant: Yangzhou Nanopore Innovative Materials Technology Ltd, Yangzhou, Jiangsu 225202 (CN)
(72) Inventor: XIA, Jianzhong, Yangzhou, Jiangsu 225202 (CN); ZHU, Zhongya, Yangzhou, Jiangsu 225202 (CN); WANG, Chenghao, Yangzhou, Jiangsu 225202 (CN); LI, Xuefa, Yangzhou, Jiangsu 225202 (CN); ZHANG, Guoping, Yangzhou, Jiangsu 225202 (CN)
(74) Representative: Finnegan Europe LLP
(86) International application number: PCT/CN2023/094250
(87) International publication number: WO 2023/221932

(57) **Abstract**

Provided are a polyester base film, a preparation method therefor and an application thereof, a pole piece, and a lithium battery cell. The material of the polyester base film comprises a polyester derivative, the polyester derivative being a derivative obtained by partially replacing original diol monomers in the corresponding polyester with diol monomers containing polar groups, the polar groups comprising one or more selected from amide groups and amine groups. The polyester derivative is used as the material to prepare the polyester base film, increasing the polar group content of the polyester base film, and improving the surface tension of the polyester base film. In addition, the surface tension of the polyester base film can be stable for a long time, effectively promoting the strong integration of the polyester base film and a surface metal layer.

## Description

### TECHNICAL FIELD

The present application relates to the field of battery technology, and in particular to a polyester base film and a preparation method therefor and an application thereof, an electrode plate and a lithium-ion battery.

### BACKGROUND

Currently, composite current collectors based on polymer films have attracted widespread attention and application in the new energy industry. Compared with conventional current collectors, composite current collectors based on polymer films have the characteristics of low cost, light weight, and good internal insulation. These characteristics allow the composite current collectors based on polymer films to reduce the cost of batteries, and improve the energy density and safety of the batteries when used in batteries.

The preparation process of composite current collectors usually includes: depositing a layer of metal material on a polymer film by physical vapor deposition. The prepared surface-metallized film with some conductivity is a composite current collector. Polymer films suitable for composite current collectors need to possess precisely controlled thermal shrinkage to minimize the thermal impact on the base film material when the metal material is deposited during physical vapor deposition, in turn avoiding quality problems such as product wrinkles due to thermal shrinkage.

However, it is a problem which needs to be solved in the preparation process of the composite current collector that the polymer film and the surface metal layer have weak bonding in the actual preparation process of the composite current collector.

### SUMMARY

Therefore, the present application provides a polyester base film, a preparation method therefor and an application thereof, an electrode plate and a lithium-ion battery. A composite current collector prepared based on the polyester base film has improved bonding force between the base film and the surface metal layer.

A first aspect of the present application provides a polyester base film, a material of the polyester base film comprises a polyester derivative, the polyester derivative comprises a first polyester derivative, and the first polyester derivative is one or more selected from a **polyethylene** terephthalate derivative, a polybutylene terephthalate derivative and a polyethylene naphthalate derivative;
the first polyester derivative is a derivative obtained by partially replacing plain diol monomers in the corresponding polyester with diol monomers having nitrogen-containing polar groups, wherein the nitrogen-containing polar grousp comprise one or more selected from amide groups and amine groups.

**In** some embodiments, for the first polyester derivative, a molar ratio between the diol monomers having the nitrogen-containing polar groups and the plain diol monomers which are not replaced is (0.1-4):1.

**In** some embodiments, in the diol monomers having the nitrogen-containing polar groups, the number of the nitrogen-containing polar groups is n, and 1 ≤ n ≤ 3.

In some embodiments, the diol monomers having the nitrogen-containing polar groups have a structure selected from a linear structure, a saturated cyclic structure and an unsaturated cyclic structure, and the unsaturated cyclic structure comprises one selected from a benzene ring and a heterocyclic ring.

In some embodiments, the diol monomers having the nitrogen-containing polar groups include one or more selected from diethanolamine, 3-hydroxy-N-(2-hydroxy-ethyl)propionamide, 4-amino-1,2-butanediol, 3-dimethylamino-1,2-propanediol, and 3-amino-1,2-propanediol.

In some embodiments, the polyester derivative further comprises a second polyester derivative, and the second polyester derivative comprises one or more selected from a polyethylene terephthalate derivative, a polybutylene terephthalate derivative, and a polyethylene naphthalate derivative; and the second polyester derivative is a derivative obtained by partially replacing plain diol monomers in the corresponding polyester with diol monomers having one or more polar groups selected from an ether-oxy group, a carboxyl group and a phenolic hydroxyl group.

In some embodiments, the second polyester derivative is a derivative obtained by partially replacing plain diol monomers in the corresponding polyester with diol monomers having one or more polar groups selected from diethylene glycol and 3-(2-hydroxyethyl)phenethyl alcohol.

In some embodiments, the polyester derivative has a weight average molecular mass of 20000 to 80000, and/or an intrinsic viscosity of 0.5-1.2 dL/g.

In some embodiments, the polyester derivative is one or more selected from a random copolymer, an alternating copolymer, a block copolymer, and a graft copolymer.

In some embodiments, the polyester derivative is the alternating copolymer, or a mixture of the alternating copolymer with one or more selected from the random copolymer, the block copolymer, and the graft copolymer.

In some embodiments, the polyester derivative accounts for 10wt%-100wt% of the polyester base film by mass.

In some embodiments, the polyester base film further includes a polyester, and the polyester includes one or more selected from polyethylene terephthalate, polybutylene terephthalate, and polyethylene naphthalate.

In some embodiments, a weight ratio of the polyester derivative to the polyester is (1/9-9): 1.

A second aspect of the present application provides a preparation method for the polyester base film described in the first aspect of the present application, which includes melting and extruding the material and then biaxial stretching to obtain the polyester base film.

A third aspect of the present application provides an application of the polyester base film described in the first aspect of the present application in the preparation of composite current collectors.

A fourth aspect of the present application provides an electrode plate, including the polyester base film described in the first aspect of the present application and an electrode active material located on the polyester base film.

A fifth aspect of the present application provides a lithium-ion battery, including the electrode plate described in the fourth aspect of the present application.

A sixth aspect of the present application provides a battery pack, including the lithium-ion battery described in the fifth aspect of the present application.

A seventh aspect of the present application provides an electrical device, including the lithium-ion battery described in the fifth aspect of the present application or the battery pack described in the sixth aspect of the present application.

The present application provides a polyester base film, a preparation method therefor and an application thereof, an electrode plate and a lithium-ion battery. A material of the polyester base film includes a polyester derivative. The polyester derivative is a derivative obtained by partially replacing plain diol monomers in the corresponding polyester with diol monomers having a nitrogen-containing polar group, wherein the nitrogen-containing polar group includes one or more selected from amide groups and amine groups. By using such polyester derivative as the material to prepare the polyester base film, the polyester base film is increased in the content of polar groups, and thereby increased in the surface tension. Meanwhile, the surface tension of the polyester base film can be stable for a long term, effectively facilitating a secure combination of the polyester base film with the surface metal layer.

### DETAILED DESCRIPTION

To facilitate understanding of the present application, the present application will be described more thoroughly below. Preferred embodiments of the present application are provided below. However, the present application can be carried out in many different forms and is not limited to the embodiments described herein. These embodiments are to provide a thorough understanding of the present disclosure.

Unless otherwise defined, all technical and scientific terms used herein have the same meaning as commonly understood by one of ordinary skill in the technical field to which the present application belongs. The terminology used herein in the description of the present application is for the purpose of describing specific embodiments only and is not intended to limit the present application. As used herein, the term "and/or" includes any and all combinations of one or more of the listed items.

In the present application, the technical features described using open-ended language include closed-ended technical solutions composed of the listed features, and also include open-ended technical solutions including the listed features.

In the present application, "one or a combination of more" refers to any one or a combination of at least two of the listed items.

In the present application, numerical intervals, unless otherwise specified, are regarded as continuous and including the minimum value and maximum value of the range, as well as every value between the minimum value and the maximum value. Further, in the case where the range is integer, every integer between the minimum value and the maximum value of the range is included. Additionally, in the case where a plurality of ranges are provided to describe a feature or characteristic, the ranges can be combined. In other words, unless otherwise specified, the ranges disclosed herein are to be understood as to include any and all sub-ranges subsumed therein.

In the present disclosure, with respect to the units of the data range, if only the right endpoint is followed by a unit, the left endpoint and the right endpoint are to have the same unit. For example, 0.5-1.2 dL/g means that the units of the left endpoint "0.5" and the right endpoint "1.2" are both dL/g.

The optional scopes associated to terms "and/or", "or/and" and "and/or" used in the present disclosure include any one or at least two of the listed items, and also includes any and all of combinations of the listed items. The "any and all combinations" include any two listed items, any more than two listed items, or the combination of all the listed items.

Currently, composite current collectors based on polymer films have attracted widespread attention and application in the new energy industry. Compared with conventional current collectors, composite current collectors based on polymer films have the characteristics of low cost, light weight, and good internal insulation. These characteristics allow the composite current collectors based on polymer films to reduce the cost of batteries, and improve the energy density and safety of the batteries when used in batteries.

The preparation process of composite current collectors based on polymer films usually includes: depositing a layer of metal (aluminum, copper, etc.) material on a polymer film (such as polypropylene, polyethylene, polyester, etc.) by the physical vapor deposition method; and the prepared surface-metallized film with certain electrical conductivity is the composite current collector.

However, during the actual preparation process of the composite current collector, a problem of weak bonding between the polymer film and the surface metal layer often arises.

It is found through research by the applicant that the reason for this problem is that the commonly used polymer films such as polypropylene, polyethylene, and polyester have weak polarity, resulting in low surface tension. The affinity between the polymer film with low surface tension and the metal material with high surface tension is poor, which causes the low adhesion at the interface between those two, as well as weak bonding.

In order to solve this problem, the surface of the polymer film is usually subjected to corona treatment to increase the surface tension of the film, thereby improving the bonding strength between the polymer film and the metal material. However, this method has the following shortcomings: 1) without greatly changing the mechanical properties of the polymer film, the surface tension of the PET (polyethylene terephthalate) polymer film after corona treatment is generally 50-70 mN/m, which is only a small improvement compared with the surface tension of the polymer film before the treatment (25-45 mN/m), and still has a large distance to the surface tension of metal material (more than 100 mN/m); hence, the bonding between the two is not perfect, and the metal layer is likely to fall off by a large area after using tape to stick and then peeling off; 2) the surface tension of the polymer film after corona treatment is unstable; the surface tension decreases after a period of storage, and finally becomes close to the surface tension of the polymer film before treatment; in other words, there is a problem of storage instability.

In order to solve this technical problem, the present application provides a polyester base film; a material of the polyester base film includes a polyester derivative, the polyester derivative includes a first polyester derivative, and the first polyester derivative includes one or more selected from a polyethylene terephthalate derivative, a polybutylene terephthalate derivative, and a polyethylene naphthalate derivative; the first polyester derivative is a derivative obtained by partially replacing plain diol monomers in the corresponding polyester with diol monomers having a nitrogen-containing polar group,, wherein the nitrogen-containing polar group includes one or more selected from amide groups and amine groups.

It should be noted that the plain diol monomers refer to the diol monomers contained in the polyester corresponding to the polyester derivative. For example, when the polyester derivative is a polyethylene terephthalate derivative and/or a polyethylene naphthalate derivative, the plain diol monomers refer to ethylene glycol; when the polyester derivative is a polybutylene terephthalate derivative, the plain diol monomers refer to butanediol; when the polyester derivative is a polyethylene terephthalate derivative and a polybutylene terephthalate derivative, or when the polyester derivative is a polybutylene terephthalate derivative and a polyethylene naphthalate derivative, or the single polyester derivative is the polyester derivative includes a polyethylene terephthalate derivative, a polybutylene terephthalate derivative and a polyethylene naphthalate derivative, the plain diol monomers refer to butanediol and ethylene glycol.

The material of the polyester base film provided by the present application includes a polyester derivative, the polyester derivative includes a first polyester derivative, and the first polyester derivative is a derivative obtained by partially replacing plain diol monomers in the corresponding polyester with diol monomers having a nitrogen-containing polar group, wherein the nitrogen-containing polar group includes one or more selected from amide groups and amine groups. Using the polyester derivative as the material for preparing the polyester base film increases the polar group content of the polyester base film, thereby increasing the surface tension of the polyester base film; meanwhile, the surface tension of the polyester base film can be stable for a long term, effectively facilitating a secure combination of the polyester base film with the surface metal layer. When the nitrogen-containing polar group is used, the lone pair electrons of N atom can coordinate to the metal, enhancing the secure combination of the polyester base film with the surface metal layer. In addition, the hydrogen bonding of amino group is slightly weaker than that of the hydroxyl group, which can effectively prevent the adhesion between films when the polyester base film is wound.

In some embodiments, the nitrogen-containing polar group can be located on the main chain of the diol monomers, or can be located on the side chain of the diol monomers.

In some embodiments, the polyester derivative further includes a second polyester derivative, and the second polyester derivative includes one or more selected from a polyethylene terephthalate derivative, a polybutylene terephthalate derivative and a polyethylene naphthalate derivative; the second polyester derivative is a derivative obtained by partially replacing plain diol monomers in the corresponding polyester with diol monomers having one or more polar groups selected from an ether-oxy group, a carboxyl group, and a phenolic hydroxyl group.

In some embodiments, a mass content percentage of the polyester derivative is 10wt%-100wt% in the polyester base film; for example, the mass content percentage may be 10%, 33.33%, 50%, 66.67%, 75%, 80%, 83.33%, 85.71%, 87.50%, 88.89%, 90% or 100%, which is not particularly limited. When the mass content percentage of the polyester derivative is less than this range, due to the small number of polar groups, the polarity of the polyester base film finally produced will be poor, and the surface tension of the polyester base film will be low.

In some embodiments, a thickness of the polyester base film may be 2 µm-20 µm; for example, the thickness may be 2 µm, 5 µm, 7 µm, 10 µm, 12 µm, 15 µm, 17 µm or 20 µm, which is not particularly limited.

In some embodiments, the MD (longitudinal direction) tensile strength of the polyester base film can reach 120 Mpa-400 Mpa, the TD (transverse direction) tensile strength can reach 100 Mpa-350 Mpa, and the elongation at break in the MD and TD directions can reach 50%-150%.

In some embodiments, the surface tension of the polyester base film can reach 40-100 mN/m. After 3 months of storage, the surface tension can reach 30-80 mN/m; in other words, after long-term storage, the surface tension of the polyester base film does not change much and can be stable for a long term.

In some embodiments, the surface roughness of the polyester base film can reach 5 nm-150 nm; in the comparison experiment of tape sticking and peeling, the detachment area of the metal layer of the polyester base film is ≤0.2%, indicating that the polyester base film can form a solid combination with the surface metal layer.

In some embodiments, for the first polyester derivative or the second polyester derivative, the diol monomers having the polar group and the plain diol monomers which are not replaced have a molar ratio of (0.1-4): 1; for example, the molar ratio may be 0.1:1, 0.5:1, 1:1, 1.5:1, 2:1, 2.5:1, 3:1, 3.5:1 or 4:1, which is not particularly limited. When the molar ratio of the diol monomers having the polar group to the plain diol monomers which are not replaced is less than this range for the polyester derivative, the surface tension of the produced polyester base film cannot be effectively improved; when the molar ratio is greater than this range, excessive amounts of polar group will affect the mechanical properties of the produced polyester base film; when the diol monomers having the polar group and the plain diol monomers which are not replaced have a molar ratio of (0.1-4):1 in the first polyester derivative or the second polyester derivative, the surface tension of the produced polyester base film is further increased without affecting the mechanical properties of polyester base film.

In some embodiments, for the first polyester derivative or the second polyester derivative, the number of the polar group in the diol monomers having the polar group is n, and 1 ≤ n ≤ 3; for example, the number of the polar group contained may be 1, 2 or 3, which is not particularly limited; wherein the polar group is a nitrogen-containing polar group, which can include one or more selected from amide groups and amine groups. When the number of the polar group in the diol monomers having the polar group is 1 ≤ n ≤ 3, the steric hindrance of the diol monomers is small, which facilitates the polymerization reaction with carboxylic acid monomers, and at the same time, the polar unit content of the polyester base film is effectively increased and the surface tension of the polyester base film is increased.

In some embodiments, the diol monomers having the nitrogen-containing polar group have one selected from a linear structure, a saturated cyclic structure and an unsaturated cyclic structure, and the unsaturated cyclic structure includes one of a benzene ring and a heterocyclic ring.

In some embodiments, the diol monomers having the nitrogen-containing polar group can include one or more selected from diethanolamine, 3-hydroxy-N-(2-hydroxy-ethyl)propionamide, 4-amino-1,2-butanediol, 3-dimethylamino-1,2-propanediol, and 3-amino-1,2-propanediol.

In some embodiments, the polyester derivative can have a weight average molecular mass of 20000 to 80000; for example, the weight average molecular mass may be 20000, 30000, 40000, 50000, 60000, 70000, or 80000, which is not particularly limited.

In some embodiments, the polyester derivative can have an intrinsic viscosity of 0.5-1.2 dL/g; for example, the intrinsic viscosity may be 0.5 dL/g, 0.6 dL/g, 0.7 dL/g, 0.8 dL/g, 0.9 dL/g, 1.0 dL/g, 1.1 dL/g or 1.2 dL/g, which is not particularly limited.

In some embodiments, the polyester derivative may be one or more selected from a random copolymer, an alternating copolymer, a block copolymer and a graft copolymer.

In some embodiments, the polyester derivative is an alternating copolymer or a mixture of an alternating copolymer with a random copolymer, a block copolymer, or a graft copolymer. It should be noted that when the polyester derivative is an alternating copolymer, the distribution of the polar group can be more uniform, which in turn facilitates the strong bonding of the polyester base film and the surface metal layer.

In some embodiments, the material further includes a polyester, and the polyester includes one or more selected from polyethylene terephthalate, polybutylene terephthalate, and polyethylene naphthalate; that is, at least one polyester derivative and at least one polyester can be blended as the material for preparing the polyester base film. It should be noted that when one polyester derivative and one polyester are blended as the material for preparing the polyester base film, the polyester derivative and polyester may not correspond. For example, when the polyester derivative used is a polyethylene terephthalate derivative, the polyester used can be any one selected from polyethylene terephthalate, polybutylene terephthalate, and polyethylene naphthalate.

In some embodiments, a weight ratio of the polyester derivative to the polyester may be (1/9-9):1; for example, the weight ratio may be 1/9:1, 0.5:1, 1:1, 2:1, 3:1, 4:1, 5:1, 6:1, 7:1, 8:1 or 9:1, which is not particularly limited. In some embodiments, when the polyester base film is prepared from a mixture of a polyester derivative and a polyester with a weight ratio of (1/9-9):1, the surface tension of the polyester base film will be further increased without affecting the mechanical properties of the polyester base film.

The present application also provides a preparation method for the above-mentioned polyester base film, which includes melting and extruding the material and then biaxial stretching to obtain the polyester base film.

It should be noted that the melting and extruding and the biaxial stretching are the melt extrusion method and biaxial stretching method commonly used in the art.

In the present application, when the polyester derivative or the mixture of the polyester derivative and polyester is used to prepare the polyester base film, the MD (longitudinal direction) stretching ratio can reach 1:(3-8), and the TD (longitudinal direction) stretching ratio can reach 1:(3-8); the MD (longitudinal) stretching rate can reach 30-80 times/min, and TD (longitudinal direction) stretching rate can reach 50-200 times/min.

When the polyester derivative or the mixture of the polyester derivative and polyester is used to prepare the polyester base film, there is no need to perform polarization post-treatment on the film, which is simple and feasible, and easy for industrial production.

The present application also provides an application of the above-mentioned polyester base film in the preparation of composite current collectors. Using the polyester base film provided by the present application as a base material to prepare composite current collectors can effectively solve the problem of weak bonding between the polymer film and the surface metal layer in the composite current collectors, and improve the stability of the composite current collectors.

In some embodiments, a composite current collector can be prepared by the following method.

Composite negative current collector: First, preparation of metal conductive layer: the polyester base film is placed in a vacuum evaporation chamber, and a high-purity copper wire (with a purity of greater than 99.99%) is melted and evaporated at a high temperature of 1400 °C to 2000 °C in a metal evaporation chamber, the evaporated metal atoms pass through a cooling system in a vacuum coating chamber and are deposited on the two surfaces of the polyester base film to form a copper conductive layer with a thickness of 1 µm. Secondly, preparation of protective layer: 1 g of graphene is uniformly dispersed into 999 g of N-methylpyrrolidone (NMP) solution by ultrasonic dispersion, prepared into a coating solution with a solid content of 0.1 wt. %, and then evenly coated on the surface of the metal conductive layer by a die, wherein a coating amount is controlled to 80 µm, and finally dried at 100°C.

The present application also provides an electrode plate, including the above-mentioned polyester base film and an electrode active material located on the polyester base film.

The present application also provides a lithium-ion battery, including the above-mentioned electrode plate.

The present application also provides a battery pack, including the above-mentioned lithium-ion battery.

The present application also provides an electrical device, including the above-mentioned lithium-ion battery or the battery pack.

The polyester base film provided by the present application and the preparation method therefor and the application thereof will be described in detail below with reference to specific examples.

It should be noted that PET mentioned in the following examples refers to polyethylene terephthalate, PBT refers to polybutylene terephthalate, and PEN refers to polyethylene naphthalate.

### Example 1

(1) Preparation of polyester base film for high-peel strength composite current collector

Resin selection: In parts by weight, 2 parts of a PET resin with an intrinsic viscosity of 0.60 dL/g and 8 parts of a PET derivative with an intrinsic viscosity of 0.70 dL/g were selected and blended. In the material, the PET derivative used was a random copolymer, part of the ethylene glycol in the PET derivative was replaced by diethylene glycol, and a molar ratio of the diethylene glycol to the ethylene glycol was 3:7.

The polyester base film was prepared by a biaxial stretching process after melting and extrusion; the stretching process: with a stretching ratio of 1:4 in the MD direction and a stretching ratio of 1:6 in the TD direction, a biaxial stretched polyester film with a final thickness of 8 µm was prepared; the MD tensile strength of the film was 200 Mpa, the TD tensile strength was 180 Mpa, and the elongation at break was greater than or equal to 80% in both directions.

(2) Preparation of composite current collector by using the aforementioned preparation method for composite current collectors.

### Example 2

(1) Preparation of polyester base film for high-peel strength composite current collector

Resin selection: In parts by weight, 9 parts of a PBT resin with an intrinsic viscosity of 0.9 dL/g and 1 part of a PET derivative with an intrinsic viscosity of 0.55 dL/g were selected and blended. In the material, the PET derivative used was a graft copolymer, part of the ethylene glycol in the PET derivative was replaced by diethanolamine, and a molar ratio of the diethanolamine to the ethylene glycol was 1:1.

The polyester base film was prepared by a biaxial stretching process after melting and extrusion; the stretching process: with a stretching ratio of 1:4 in the MD direction and a stretching ratio of 1:6 in the TD direction, a biaxial stretched polyester film with a final thickness of 8 µm was prepared; the MD tensile strength of the film was 300 Mpa, the TD tensile strength was 280 Mpa, and the elongation at break was greater than or equal to 120% in both directions.

(2) Preparation of composite current collector by using the aforementioned preparation method for composite current collectors.

### Example 3

(1) Preparation of polyester base film for high-peel strength composite current collector

Resin selection: In parts by weight, 1 part of a PEN resin with an intrinsic viscosity of 0.7 dL/g, 5 parts of a PEN derivative with an intrinsic viscosity of 0.5 dL/g and 4 parts of a PBT derivative with an intrinsic viscosity of 0.9 dL/g were selected and blended. In the material, the PEN derivative used was an alternating copolymer, part of the ethylene glycol in the PEN derivative was replaced by 3-hydroxy-N-(2-hydroxy-ethyl)propionamide, and a molar ratio of the 3-hydroxy-N-(2-hydroxy-ethyl)propionamide to the ethylene glycol was 2:1; the PBT derivative used was a block copolymer, part of the butanediol in the PBT derivative was replaced by 3-(2-hydroxyethyl)phenethyl alcohol, and a molar ratio of the 3-(2-hydroxyethyl)phenethyl alcohol to the butanediol was 3:1.

The polyester base film was prepared by a biaxial stretching process after melting and extrusion; the stretching process: with a stretching ratio of 1:4.5 in the MD direction and a stretching ratio of 1:5 in the TD direction, a biaxial stretched polyester film with a final thickness of 7.5 µm was prepared; the MD tensile strength of the film was 190 Mpa, the TD tensile strength was 160 Mpa, and the elongation at break was greater than or equal to 80% in both directions.

(2) Preparation of composite current collector by using the aforementioned preparation method for composite current collectors.

### Example 4

(1) Preparation of polyester base film for high-peel strength composite current collector

Resin selection: In parts by weight, 3 parts of a PET resin with an intrinsic viscosity of 0.8 dL/g, 3 parts of a PEN derivative with an intrinsic viscosity of 0.6 dL/g and 4 parts of a PBT derivative with an intrinsic viscosity of 1.2 dL/g were selected and blended. In the material, the PET derivative used was a random copolymer, part of the ethylene glycol in the PET derivative was replaced by diethylene glycol, and a molar ratio of the diethylene glycol to the ethylene glycol was 0.1:1; the PEN derivative used was a graft copolymer, part of the ethylene glycol in the PEN derivative was replaced by diethanolamine, and a molar ratio of the diethanolamine to the ethylene glycol was 4:1; the PBT derivative used was a block copolymer, part of the butanediol in the PBT derivative was replaced by 3-(2-hydroxyethyl)phenethyl alcohol, and a molar ratio of the 3-(2-hydroxyethyl)phenethyl alcohol to the butanediol was 2.5:1.

The polyester base film was prepared by a biaxial stretching process after melting and extrusion; the stretching process: with a stretching ratio of 1:4.5 in the MD direction and a stretching ratio of 1:5 in the TD direction, a biaxial stretched polyester film with a final thickness of 6 µm was prepared; the MD tensile strength of the film was 210 Mpa, the TD tensile strength was 180 Mpa, and the elongation at break was greater than or equal to 80% in both directions.

(2) Preparation of composite current collector by using the aforementioned preparation method for composite current collectors.

### Example 5

(1) Preparation of polyester base film for high-peel strength composite current collector

Resin selection: In parts by weight, 5 parts of a PET resin with an intrinsic viscosity of 0.85 dL/g and 5 parts of a PEN derivative with an intrinsic viscosity of 0.85 dL/g were selected and blended. In the material, the PET derivative used was a random copolymer, part of the ethylene glycol in the PET derivative was replaced by diethylene glycol, and a molar ratio of the diethylene glycol to the ethylene glycol was 0.5:1; the PEN derivative used was a block copolymer, part of the ethylene glycol in the PEN derivative was replaced by diethanolamine, and a molar ratio of the diethanolamine to the ethylene glycol was 3.5:1.

The polyester base film was prepared by a biaxial stretching process after melting and extrusion; the stretching process: with a stretching ratio of 1:4.5 in the MD direction and a stretching ratio of 1:5 in the TD direction, a biaxial stretched polyester film with a final thickness of 5.5 µm was prepared; the MD tensile strength of the film was 250 Mpa, the TD tensile strength was 220 Mpa, and the elongation at break was greater than or equal to 100% in both directions.

(2) Preparation of composite current collector by using the aforementioned preparation method for composite current collectors.

### Example 6

The only difference between Example 6 and Example 1 is that only 10 parts by weight of a PET derivative with an intrinsic viscosity of 0.70 dL/g were used to prepare the polyester base film, and the other was the same. The MD tensile strength of the obtained film was 160 Mpa, the TD tensile strength was 120 Mpa, and the elongation at break was greater than or equal to 100% in both directions.

### Comparative Example 1

The only difference between Comparative Example 1 and Example 1 is that only 10 parts by weight of a PET derivative with an intrinsic viscosity of 0.60 dL/g were used to prepare the polyester base film, and the other was the same. The MD tensile strength of the obtained film was 200 Mpa, the TD tensile strength was 180 Mpa, and the elongation at break was greater than or equal to 100% in both directions.

### Comparative Example 2

The only difference between Comparative Example 2 and Example 1 is that only 10 parts by weight of a PET derivative with an intrinsic viscosity of 0.60 dL/g were used to prepare the polyester base film, and corona treatment was performed to prepare the polyester base film. The MD tensile strength of the obtained film was 200 Mpa, the TD tensile strength was 180 Mpa, and the elongation at break was greater than or equal to 100% in both directions.

### Comparative Example 3

The only difference between Comparative Example 3 and Example 1 is that part of the ethylene glycol in the PET derivative was replaced by diethylene glycol, and a molar ratio of the diethylene glycol to ethylene glycol was 0.05:1, and the other was the same. The MD tensile strength of the obtained film was 250 Mpa, the TD tensile strength was 220 Mpa, and the elongation at break was greater than or equal to 100% in both directions.

### Comparative Example 4

The only difference between Comparative Example 4 and Example 1 is that part of the ethylene glycol in the PET derivative was replaced by diethylene glycol, and a molar ratio of the diethylene glycol to ethylene glycol was 5:1, and the other was the same. The MD tensile strength of the obtained film was 100 Mpa, the TD tensile strength was 90 Mpa, and the elongation at break was greater than or equal to 150% in both directions. The mechanical strength is too weak and cannot satisfy the preparation process requirements of the current collector in the next step.

### Performance Testing

An atomic force microscope was used to determine the surface tension and surface roughness of the polyester base films prepared in Examples 1-6 and Comparative Examples 1-4. The results are shown in Table 1.

**Table 1**

| Film | | Exam ple 1 | Exam ple 2 | Exam ple 3 | Exam ple 4 | Exam ple 5 | Exam ple 6 | Compa rative Examp le 1 | Compa rative Examp le 2 | Compa rative Examp le 3 | Compa rative Examp le 4 |
|---|---|---|---|---|---|---|---|---|---|---|---|
| Initial | surface tension (mN/m) | 78 | 60 | 90 | 100 | 92 | 45 | 35 | 50 | 38 | 82 |
| | surface roughne ss (nm) | 95 | 105 | 88 | 95 | 68 | 91 | 75 | 80 | 77 | 89 |
| After 3 months of storage | surface tension (mN/m) | 77 | 58 | 88 | 93 | 90 | 42 | 35 | 38 | 37 | 80 |
| | surface roughne ss (nm) | 96 | 108 | 85 | 100 | 75 | 95 | 76 | 79 | 78 | 92 |

The adhesion performance of the composite current collectors prepared in Examples 1-6 and Comparative Examples 1-3 was evaluated. The evaluation method is as follows: 3M Scotch tape (type 600 or 610) with a length of 200 mm and a width of 15 mm was attached to the metal layer of the composite current collector on the surface; the sample was rolled by a roller for 2 cycles at a speed of 10 mm/s; then the tape was peeled off at a speed of 100 mm/min at an angle of 60 degrees; finally, the area percentage of metal peeled by the tape was recorded and analyzed. The results are shown in Table 2.

**Table 2**

| Film | | Exam ple 1 | Exa mple 2 | Exam ple 3 | Exam ple 4 | Exam ple 5 | Exam ple 6 | Comp arativ e Exam ple 1 | Comp arativ e Exam ple 2 | Comp arativ e Exam ple 3 | Compar ative Exampl e 4 |
|---|---|---|---|---|---|---|---|---|---|---|---|
| Area percentag e of metal peeled by tape in adhesion performan ce test (%) | Positiv e current collect or | 0.19 % | 0.3% | 0.05% | 0.01% | 0.01% | 3.0% | 4.0% | 1.0% | 3.8% | Fail to prepare current collector |
| | Negati ve current collect or | 0.18 % | 0.29 % | 0.04% | 0.01% | 0.02% | 3.2% | 5.0% | 0.9% | 3.76 % | Fail to prepare current collector |

From the results in Table 1 and Table 2, it can be seen that the surface tension and surface roughness of the polyester base film prepared in Examples 1-6 are significantly improved, and the storage is stable. The adhesion performance of the polyester base film with the metal layer is significantly improved, and the polyester base film is more suitable for surface deposition of metal and preparation of composite current collectors. It is shown that when the polyester base film is prepared from at least one polyester derivative, or the polyester base film is prepared from a mixture of a polyester derivative and a polyester with a weight ratio of (1/9-9): 1, and the diol monomers having the polar group and the plain diol monomers which are not replaced have a molar ratio of (0.1-4):1, with different stretching process parameters, the surface tension and surface roughness of the prepared polyester base film are both significantly improved, and the surface tension of the polyester base film can be stable for a long term, effectively facilitating a secure combination of the polyester base film with the surface metal layer, which is beneficial to the preparation of composite current collectors.

It can be seen from the results in Table 1 and Table 2 that because the raw materials for preparing the polyester base film in Examples 2-5 contain at least one polyester derivative which is prepared by partially replacing plain diol monomers corresponding to a polyester by diol monomers having a nitrogen-containing polar group, the prepared polyester base film can have good surface tension and surface roughness and storage stability, even if the mass percentage of polyester derivative in the polyester base film is 10%.

It can be seen from the results of Examples 1-2, Example 6 and Examples 3-5 that the polyester base film prepared from raw material including at least two polyester derivatives has superior surface tension and surface roughness than the polyester base film prepared from raw material including one polyester derivative. Moreover, the polyester base film prepared from raw material of a mixture of one polyester derivative and at least one polyester has superior surface tension and surface roughness than the polyester base film prepared from raw material of only one polyester derivative.

It can be seen from the results of Example 1, Example 6 and Comparative Examples 1-2 that when only polyester is used to prepare the polyester base film, the surface tension and surface roughness of the prepared polyester base film are poor; even if the corona process is performed on the polyester base film prepared from polyester, the surface tension and surface roughness of the prepared polyester base film can only have limited improvement, and the surface tension of the polyester base film cannot be stable for a long term, and the adhesion performance of the polyester base film with the metal layer is poor. It is shown that by using the polyester derivative which is prepared by partially replacing plain diol monomers by diol monomers having a polar group as the material for preparing the polyester base film, the content of polar group of the polyester base film is increased, and thereby the surface tension of the polyester base film is increased and can be stable for a long term, effectively facilitating a secure combination of the polyester base film with the surface metal layer.

It can be seen from the results of Example 1 and Comparative Examples 3 and 4 that the polyester base film prepared from PET derivative having the molar ratio of diethylene glycol to ethylene glycol being 3:7 has superior surface tension and surface roughness than the polyester base film prepared from PET derivative having the molar ratio of diethylene glycol to ethylene glycol being 0.05:1; and the polyester base film prepared by the molar ratio of diethylene glycol and ethylene glycol in the PET derivative being 5:1 cannot meet the requirements for the preparation of current collectors, that is, the mechanical properties of the prepared polyester base film are affected; it is shown that when the diol monomers having the polar group and the plain diol monomers which are not replaced have a molar ratio of (0.1-4):1 in the polyester derivative, the surface tension of the produced polyester base film is further increased without affecting the mechanical properties of polyester base film.

The technical features of the embodiments can be combined in any way. To simplify the description, possible combinations of the technical features in the embodiments are not exhaustedly described. However, as long as there is no contradiction in the combination of these technical features, all the combination of these technical features should be considered to fall within the scope of this specification.

The above-mentioned embodiments only represent several implementation modes of the present application, and their descriptions are relatively specific and detailed, but they should not be construed as limiting the scope of the present application. It should be noted that, for those of ordinary skill in the art, several modifications and improvements can be made without departing from the concept of the present application, all of which belong to the protection scope of the present application. Therefore, the scope of protection of the present application should be defined by the appended claims.

## Claims

1. A polyester base film, wherein a material of the polyester base film comprises a polyester derivative, the polyester derivative comprises a first polyester derivative, and the first polyester derivative comprises one or more selected from a polyethylene terephthalate derivative, a polybutylene terephthalate derivative and a polyethylene naphthalate derivative;
the first polyester derivative is a derivative obtained by partially replacing plain diol monomers in the corresponding polyester with diol monomers having a nitrogen-containing polar group,, wherein the nitrogen-containing polar group comprises one or more selected from amide groups and amine groups.

2. The polyester base film according to claim 1, wherein for the first polyester derivative, the diol monomers having the nitrogen-containing polar group and the plain diol monomers which are not replaced have a molar ratio of (0.1-4):1.

3. The polyester base film according to claim 1, wherein in the diol monomers having the nitrogen-containing polar groups, the number of the nitrogen-containing polar group is n, and 1 ≤n≤3.

4. The polyester base film according to claim 1, wherein the diol monomers having the nitrogen-containing polar group have one selected from a linear structure, a saturated cyclic structure and an unsaturated cyclic structure, and the unsaturated cyclic structure comprises one of a benzene ring and a heterocyclic ring.

5. The polyester base film according to any one of claims 1 to 4, wherein the diol monomers having the nitrogen-containing polar group comprise one or more selected from diethanolamine, 3-hydroxy-N-(2-hydroxy-ethyl)propionamide, 4-amino-1,2-butanediol, 3-dimethylamino-1,2-propanediol, and 3-amino-1,2-propanediol.

6. The polyester base film according to claim 1, wherein the polyester derivative has a weight average molecular mass of 20000 to 80000, and/or an intrinsic viscosity of 0.5-1.2 dL/g.

7. The polyester base film according to claim 1, wherein the polyester derivative is one or more selected from a random copolymer, an alternating copolymer, a block copolymer, and a graft copolymer;
optionally, the polyester derivative is the alternating copolymer, or a mixture of the alternating copolymer with one or more selected from the random copolymer, the block copolymer, and the graft copolymer.

8. The polyester base film according to claim 1, wherein the polyester derivative further comprises a second polyester derivative, and the second polyester derivative comprises one or more selected from a polyethylene terephthalate derivative, a polybutylene terephthalate derivative, and a polyethylene naphthalate derivative;
the second polyester derivative is a derivative obtained by partially replacing plain diol monomers in the corresponding polyester with diol monomers having one or more polar groups selected from an ether-oxy group, a carboxyl group, and a phenolic hydroxyl group.

9. The polyester base film according to claim 8, wherein the second polyester derivative is a derivative obtained by partially replacing plain diol monomers in the corresponding polyester with diol monomers having one or more polar groups selected from diethylene glycol and 3-(2-hydroxyethyl)phenethyl alcohol.

10. The polyester base film according to any one of claims 1 to 9, wherein the polyester derivative accounts for 10wt%-100wt% of the polyester base film by mass.

11. The polyester base film according to any one of claims 1 to 9, wherein the material further comprises a polyester, and the polyester comprises one or more selected from polyethylene terephthalate, polybutylene terephthalate, and polyethylene naphthalate.

12. The polyester base film according to claim 11, wherein a weight ratio of the polyester derivative to the polyester is (1/9-9): 1.

13. A preparation method for the polyester base film according to any one of claims 1 to 12, comprising melting and extruding the material and then biaxial stretching to obtain the polyester base film.

14. Use of the polyester base film according to any one of claims 1 to 12 in the preparation of composite current collectors.

15. An electrode plate, comprising the polyester base film according to any one of claims 1 to 12 and an electrode active material located on the polyester base film.

16. A lithium-ion battery, comprising the electrode plate according to claim 15.

17. A battery pack, comprising the lithium-ion battery according to claim 16.

18. An electrical device, comprising the lithium-ion battery according to claim 17 or the battery pack according to claim 17.
